**Europäisches Patentamt**

**European Patent Office**

**Office européen des brevets**

(19)

(11) Veröffentlichungsnummer : **0 282 736 B1**

(12) **EUROPÄISCHE PATENTSCHRIFT**

(45) Veröffentlichungstag der Patentschrift :
02.05.91 Patentblatt 91/18

(51) Int. Cl.⁵ : **A01F 12/52**

(21) Anmeldenummer : **88102010.1**

(22) Anmeldetag : **11.02.88**

(54) **Rückführeinrichtung für Mähdrescher.**

(30) Priorität : 20.03.87 DE 3709242

(43) Veröffentlichungstag der Anmeldung :
21.09.88 Patentblatt 88/38

(45) Bekanntmachung des Hinweises auf die
Patenterteilung :
02.05.91 Patentblatt 91/18

(84) Benannte Vertragsstaaten :
**BE DE FR GB IT**

(56) Entgegenhaltungen :
EP-A- 0 091 538
DE-A- 2 632 560
DE-B- 1 199 536
FR-A- 1 521 157

(56) Entgegenhaltungen :
GB-A- 2 051 542
US-A- 2 750 037
US-A- 3 581 746
US-A- 3 910 285

(73) Patentinhaber : **DEERE & COMPANY**
**1 John Deere Road**
**Moline, Illinois 61265 (US)**

(72) Erfinder : Schuhmacher, Ernst
**Donaustrasse 4**
**W-6650 Homburg-Einöd (DE)**

(74) Vertreter : Feldmann, Bernhard et al
**DEERE & COMPANY European Office, Patent**
**Department Steubenstrasse 36-42 Postfach**
**503**
**W-6800 Mannheim 1 (DE)**

# Beschreibung

Die Erfindung bezieht sich auf eine an einem Mähdrescher vorgesehene Rückführeinrichtung für eine einen Siebkasten zum Auffangen, Sieben und Reinigen des ausgedroschenen Gutes aufweisende Reinigungsvorrichtung mit einer Fördereinrichtung zum Rückführen des bei Hangfahrten auf dem Siebkasten zur Talseite wandernden unausgesiebten Gutes, zu der zwei an je einer Seite der Reinigungsvorrichtung vorgesehene Auslässe, von denen einer bei Schräglage des Mähdreschers das unausgesiebte Gut der Hangseite der Reinigungsvorrichtung bzw. des Siebkastens zuführt, und eine Querfördervorrichtung gehören, der bei Hangfahrten das unausgesichte gut zugeführt wird.

Diese Rückführeinrichtung (DE-A1-32 12 694) besteht aus einem Überkehrsystem mit einer einzigen Schnecke mit zwei gegenläufigen Schneckengängen, die unter einem Siebkasten angeordnet ist und deren Enden in Wurfelevatoren, die gleichzeitig als Nachdrescher ausgebildet sind, münden. Diese sind an beiden Seiten des Mähdreschers vorgesehen, und von diesen führen Rohre, an die sich noch Leitrohre anschließen, bis über den Siebkasten. Am Ende des Siebkastens ist ein Boden vorgesehen, über den am Ende des Siebkastens austretendes Gut der rechts- und linksdrehenden Schnecke zugeführt wird, so daß diese auch als Überkehrschnecke arbeitet. Die Leitrohre, an die sich noch von Hand verstellbare Leitbleche anschließen können, sollen das Gut aus der Überkehr auf der gesamten Breite des Siebkastens verteilen und wirken bei Hangfahrten derart, daß das dann auf dem Siebkasten zur Talseite wandernde Gut der Schnecke über den Boden aufgegeben und von dieser zur Talseite gefördert wird, dort in den Wurfelevator gelangt und auf dem Siebkasten von der Talseite zur Hangseite gegen den Luftstrom des gegenüberliegenden Wurfelevators bzw. seines als Auslaß dienenden Leitrohrs geblasen wird. Damit das Gut von der Talseite zur Hangseite überhaupt geblasen werden kann, müssen sich die Leitrohre weit über den Siebkasten erstrecken, wozu bereits in diesem Bereich ein entsprechender Freiraum geschaffen werden muß, wodurch die Bauhöhe des Mähdreschers entsprechend vergrößert werden muß. Hinzu kommt als weiterer Nachteil, daß die Luftströme gegeneinander arbeiten, die Ablage durch die unverzichtbaren Hangstreben zumindest beeinträchtigt wird, so daß das Gut letztlich nicht zu der gewünschten Ablage an der Hangseite gefördert wird, was auch durch die aufwendigen Leitbleche nicht verbessert werden kann, insbesondere wenn die Bedienungsperson diese nicht richtig eingestellt hat. Des weiteren wird die Ablage noch durch den Luftstrom des diesen Bereich mitbeaufschlagenden Reinigungsgebläses behindert.

Die mit der Erfindung zu lösende Aufgabe wird darin gesehen, die bei der gattungsmäßig berücksichtigten Rückführeinrichtung bei Hangfahrten angestrebte Wirkung mit einfachen, Mitteln zu erreichen. Diese Aufgabe ist dadurch gelöst, daß die Querfördervorrichtung das ihr auf der Talseite zugeführte Gut zu ihrem hangseitigen Ende fördert und das unausgesiebte Gut über den Auslaß an der Hangseite auf die Reinigungsvorrichtung bzw. den Siebkasten rückgeführt wird. Durch diese Maßnahme werden alle vorstehend zum Stand der Technik aufgeführten Nachteile vermieden, wobei es zunächst unerheblich ist, ob das Gut durch die Auslässe geblasen oder über Fördermittel ausgetragen wird. Die Wahl des hangseitigen Auslasses macht es jedenfalls möglich, das Gut direkt auf die Hangseite eines zur Reinigungsvorrichtung gehörenden Teils, wie den Siebkasten, den Zuführboden oder den Schüttlerrücklaufboden, rückzufördern. Das Gut kann dabei durch vielerlei gestaltete Fördereinrichtungen zu den Auslässen gelangen, beispielsweise durch direkt am Ende des Siebkastens vorgesehene Gebläse, oder bis zu den Auslässen vom Ende des Siebkastens geführte Schnecken oder dergleichen.

Bei dieser Querfördervorrichtung kann, an ihren beiden Enden je ein Höhenförderer mit den je endseitig vorgesehenen Auslässen angeschlossen sein. Je nachdem wie die Querfördervorrichtung ausgebildet ist, kann ihre Fördervorrichtung umkehrbar sein, beispielsweise wenn sie als Kratzförderer ausgebildet ist. Als besonders zweckmäßig wird es jedoch erachtet, daG die Querfördereinrichtung aus zwei gegenläufig arbeitenden Förderelementen besteht, die mit ihrem einen Ende an einen Höhenförderer angeschlossen sind, wobei ihr anderes Ende bzw. ein diesem Ende zugeordneter Bereich mit je einer Endseite des Siebkastens verbunden ist, wobei die Förderelemente als Förderschnecken ausgebildet sind. Auf diese Weise kann bei Fahrten in der Ebene und auch am Hang das Überkehrmaterial am Ende des Siebkastens jeweils zur gegenüberliegenden Seite des Mähdreschers gefördert werden, so daG beide Schnecken auch als Überkehrschnecken arbeiten. Bei Hangfahrten wird das auf die Hangseite rückgeführte Gut von dort in Richtung auf das Siebkastenende gefördert, wobei es diagonal zur Talseite wandert und einem weiteren Reinigungsgang unterworfen wird. Im einzelnen können die Förderschnecken in je einem eine Einlaßöffnung und eine Auslaßöffnung aufweisenden Schneckengehäuse angeordnet sein, die sich über die seitliche Begrenzung des Siebkastens hinaus erstrecken.

Vorteilhaft kann jeder Auslaß der Höhenförderer in dem Bereich des Rücklaufbodens eines Hordenschüttlers und/oder eines dem Siebkasten vorgeschalteten Zuführbodens vorgesehen sein, wobei der Höhenförderer als Elevatorförderer oder als ein Schaufelrad aufweisender Wurfförderer ausgebildet ist. Bei der Ausbildung des Höhenförderers als Elevatorförderer ergeben sich bei der Ablage keine Probleme, da das Gut einfach auf die Hangseite des entsprechenden Teiles fällt oder auf diese durch ein Wurfrad gelangt. Auch die Ausbildung als Wurfförderer ist insbesondere dann problemlos, wenn die Auslässe nicht quer zum Siebkasten oder dergleichen, sondern in dessen Längsrichtung gerichtet sind.

Ferner können nach der Erfindung die beiden horizontal angeordneten Förderschnecken unterhalb des Siebkastens in einer Ebene und hintereinander angeordnet sein.

Andererseits kann erfindungsgemäß eine jede Einlaßöffnung mit an Seitenwänden des Siebkastens angeordneten Auffangelementen in Förderverbindung stehen, wobei die Auffangelemente an jeder Seitenwand aus mit Bezug auf die Standfläche des Mähdreschers geneigt verlaufenden Rücklaufrinnen bestehen, die in etwa V-förmig zueinander ausgerichtet sind und deren Abgabeenden mittel- oder unmittelbar mit dem Höhenförderer in Wirkverbindung stehen, während das vordere Ende der einen Rücklaufrinne sich bis in den vorderen Bereich des Siebkastens und das hintere Ende der anderen Rücklaufrinne sich bis in den Abgabebereich des Siebkastens erstreckt.

Wenn es aus bestimmten Gründen nicht erwünscht ist, daß das Gut über das Ende des Siebkastens bzw. eines Überkehrsiebes übertritt, können an der Seite und/oder im Bereich des Endes des oberen und/oder unteren Siebes größere Durchlaßöffnungen vorgesehen sein, die bei Schräglage des Siebkastens über Klappen geöffnet sind und seitlich angesamieltes Erntegut über die Rücklaufrinnen oder einen geneigt verlaufenden Boden einem Höhenförderer zuführen.

Jeweils am Aufgabeende der Förderschnecke ist das Schaufelrad des Wurfförderers angeordnet.

In der Zeichnung sind zweinachfolgend näher erläuterte Ausführungsbeispiele der Erfindung dargestellt. Es zeigt :

Fig. 1 eine schematische Darstellung eines Mähdreschers in Seitenansicht,

Fig. 2 ein erstes Ausführungsbeispiel einer Rückführeinrichtung,

Fig. 3 ein zweites Ausführungsbeispiel der Rückführeinrichtung,

Fig. 4 eine Rückansicht der Rückführeinrichtung gemäß Fig. 3,

Fig. 5 eine Rückansicht der Rückführeinrichtung gemäß Fig. 2.

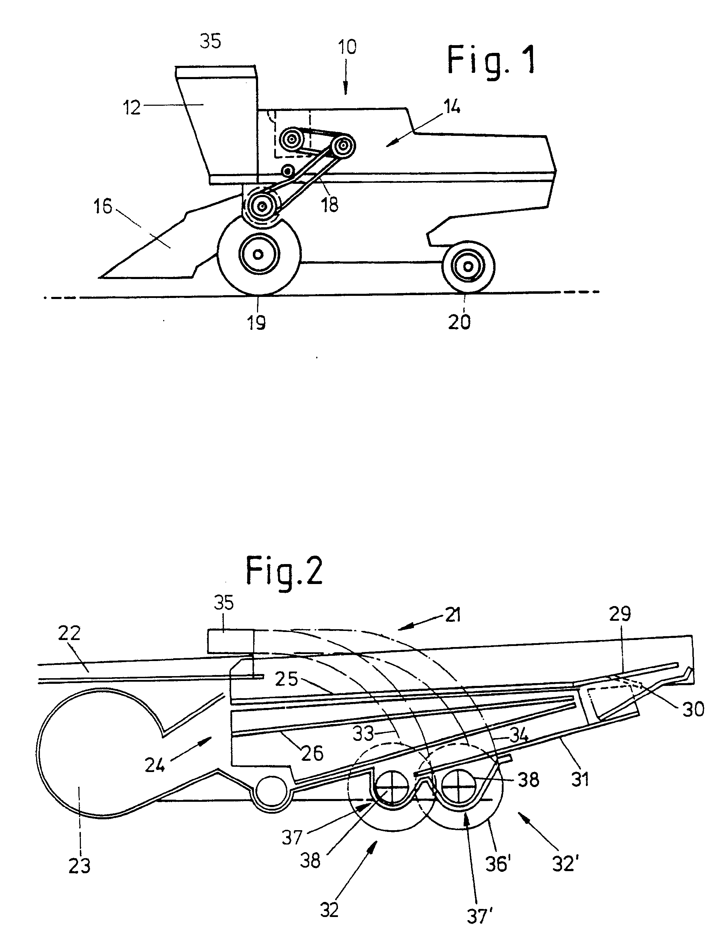

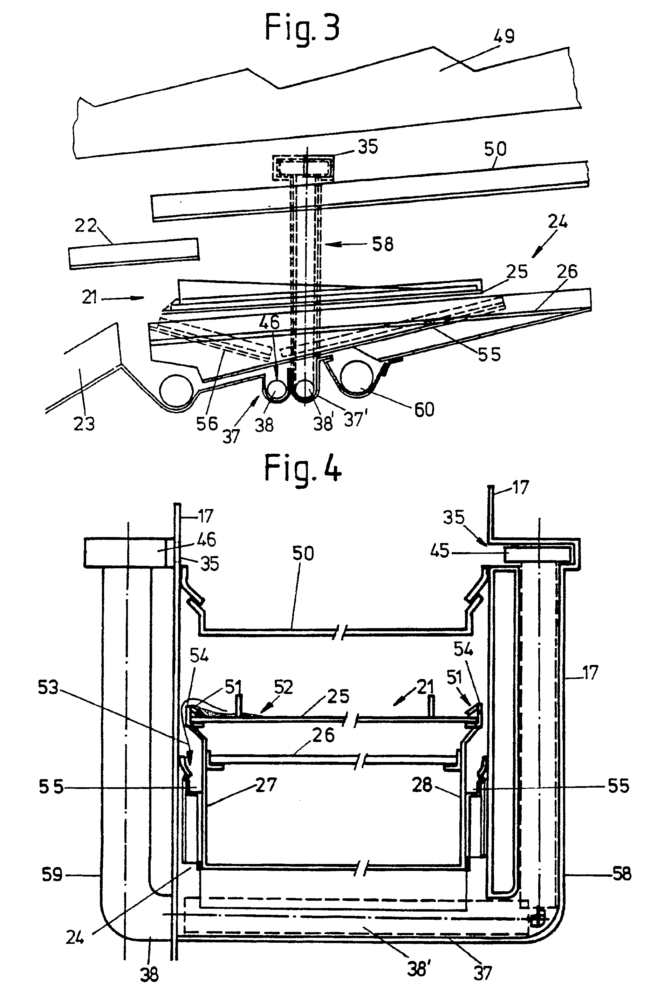

In der Zeichnung ist mit 10 ein Mähdrescher bezeichnet, der mit einer Fahrerkabine 12 und einem hinter der Fahrerkabine 12 vorgesehenen Mähdreschergehäuse 14 ausgerüstet ist, das einmal einen in der Zeichnung nicht dargestellten Sammelbehälter und eine in Fig. 2 bzw. 3 dargestellte Reinigungsvorrichtung 21 aufnimmt. Unterhalb der Fahrerkabine 12 befindet sich ein Schrägförderer 16, der über eine Antriebsvorrichtung 18 antreibbar ist. Der Mähdrescher 10 stützt sich auf zwei antreibbaren vorderen Laufrädern 19 und hinteren steuerbaren Laufrädern 20 ab.

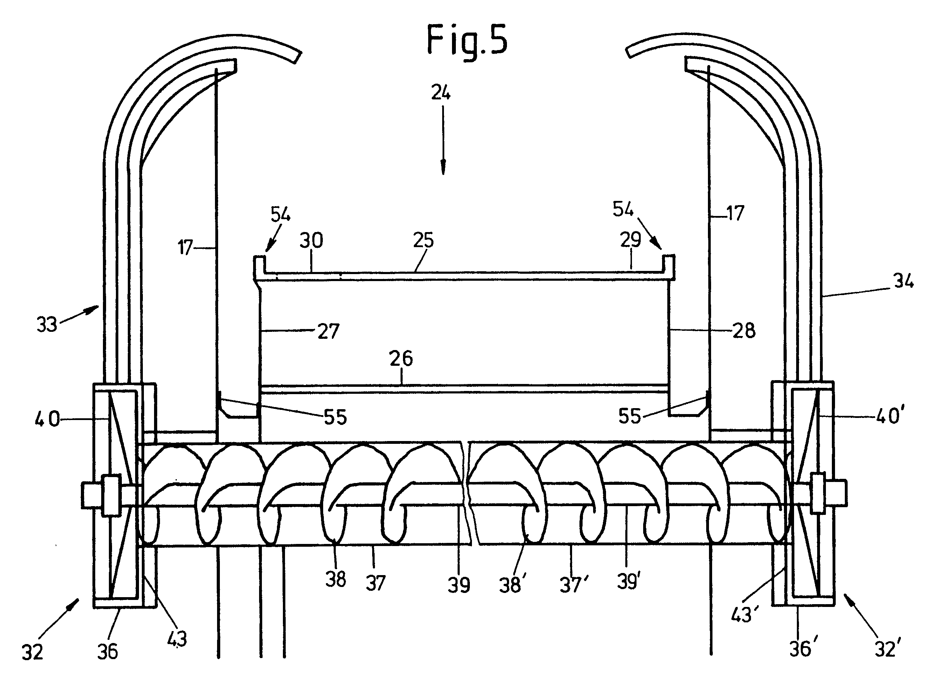

Die Reinigungsvorrichtung 21 wird über einen Zuführboden 22 mit Erntegut beschickt und ist seitlich von Seitenwänden 17 begrenzt (Fig. 4, 5). gemäß Fig. 4 kann die Seitenwand 17 entweder innerhalb eines nachfolgend beschriebenen Elevatorförderers 59 oder außerhalb (siehe rechter Teil des Mähdreschers gemäß Fig. 4) eines Elevatorförderers 58 liegen. Oberhalb der Reinigungsvorrichtung 21 und des Zuführbodens 22 befindet sich ein Hordenschüttler 49 mit einem Rücklaufboden 50 (Fig. 3).

Die Reinigungsvorrichtung 21 wird über ein Gebläse 23 mit Reinigungsluft von vorne her versorgt. Wie aus Fig. 2 bis 5 hervorgeht, besteht die Reinigungsvorrichtung 21 aus einem Siebkasten 24, der aus einem oberen Sieb bzw. Spreusieb 25 und einem unteren Sieb bzw. Körnersieb 26 besteht, die durch eine linke und rechte Seitenwand 27 und 28 begrenzt und miteinander verbunden sind. Die obere Kante der Seitenwand 27 bzw. 28 liegt oberhalb der Oberfläche des oberen Siebes 25, so daß bei Schräglage das Erntegut nicht sofort über die obere Kante der Seitenwand 27 bzw. 28 wandern kann. Sammelt sich jedoch durch die Schräglage des Mähdreschers 10 am Hang übermäßig viel Erntegut auf der einen Seite des oberen Siebes 25 an, so kann das Erntegut zuerst einmal über vorzugsweise im rückwärtigen Bereich an den Seitenwänden 27 und 28 des Siebes 25 bzw. in einem sich an das Körnersieb anschließenden Überkehrsieb vorgesehene Durchlaßöffnungen 29 wandern oder austreten, die jeweils über eine in Abhängigkeit der Schräglage des Mähdreschers verstellbare Klappe 30 geöffnet werden können. Die Klappe 30 kann jedoch auch entfallen, wenn die Durchlaßöffnungen ganz am Ende des Siebes vorgesehen sind. Andererseits können auch die Durchlaßöffnungen entfallen, wobei dann das Gut über das rückwärtige Ende des Überkehrsiebes gegebenenfalls wandert.

Bei der Ausführung nach Fig. 2 und 5 gelangt das durch die seitlich angeordneten Durchlaßöffnungen 29 geleitete Gut über einen geneigt verlaufenden Boden 31 zu einem linken oder rechten Wurfförderer 32 oder 32', der das Erntegut wie nachfolgend beschrieben – auf das rückwärtige Ende des Zuführbodens 22 abgibt. Jeder Wurfförderer 32 bzw. 32' weist je einen außen neben den seitenwänden 27 und 28 angeordneten Wurfschacht 33 und 34 auf, und da der linke und rechte Wurfförderer 32 und 32' im wesentlichen gleich ausgebildet sind, ist lediglich der linke, hintere Wurfförderer 32' im Detail unter Bezugnahme auf Fig. 2 und 5 beschrieben, wobei die mit dem linken Wurfförderer 32' identischen Bezugszahlen des rechten Wurfförderers 32 nicht mit einem Beistrich versehen sind. Dieser Wurfförderer 32' besteht aus einem Wurffördergehäuse 36', das an einem zylindrischen Schneckengehäuse 37' fest angeordnet ist (in der Zeichnung ist nur die linke Hälfte des Schneckengehäuses 37' dargestellt). Das Schneckengehäuse 37' dient zur Aufnahme einer nach links fördernden Förderschnecke 38', deren Schneckenwelle 39' beispielsweise in einer seitenwand 43' des Wurffördergehäuses 36' drehbar gelagert ist. Auf dem linken Ende der Schneckenwelle 39' sitzt ein Schaufelrad 40', über das das aufgenommene Gut über den an das Wurffördergehäuse 36' anschließenden Wurfschacht 34 nach oben transportiert wird. Das Abgabeende des Wurfschachts 34 endet oberhalb des Abgabeendes des Zuführbodens 22 dicht neben seiner linken Außenkante in einen Auslaß 35, so daß das durch den Wurfförderer aufgenommene Erntegut erneut dem Zuführboden und somit dem Reinigungsprozeß zugeführt werden kann.

Im Ausführungsbeispiel gemäß Fig. 2 fehlt eine in Fig. 3 dargestellte Überkehrschnecke 60, da die nach links fördernde Förderschnecke 38' und die nach rechts fördernde Förderschnecke 38 die Aufgabe der Überkehrschnecke übernehmen. Das am hinteren Ende des oberen Siebes 25 gegebenenfalls durch die Durchlaßöffnungen 29 abgegebene Gut gelangt über den Boden 31 entweder zu der linken oder zu der rechten Förderschnecke 38' bzw. 38, der hierzu entsprechend ausgebildet, beispielsweise geteilt, ist. Arbeitet der Mähdrescher in Normallage, d. h. in horizontaler Ebene, so gelangt ein kleiner Teil des Erntegutes, die sogenannte Überkehr, durch die Durchlaßöffnungen 29 über den Boden 31 in die Schneckengehäuse 37' und 37, die hierzu mit in der Zeichnung nicht dargestellten Einlaßöffnungen versehen sind. Somit kann der Wurfförderer 32 bzw. 32' zwei Funktionen erfüllen.

In Fig. 2 ist vor der nach links fördernden Förderschnecke 38' die rechte Förderschnecke mit ihrem Schneckengehäuse 37 zu erkennen. die nach rechts fördernde Förderschnecke 38 (in Fig. 5 der Zeichnung ist nur die rechte Hälfte dargestellt) arbeitet also entgegengesetzt zur Förderschnecke 38'. Wie bereits kurz erwähnt wurde, besteht bei Hangfahrten des Mähdreschers die Tendenz, daß das Gut von der Hangseite diagonal zur Talseite auf dem oberen Sieb 25 wandert, sich dort ansammelt und nach rückwärts bis zum Ende des Überkehrsiebes bzw. zu den Durchlaßöffnungen gefördert wird. Hat beispielsweise der Mähdrescher eine Schräglage derart, daß seine rechte Seite hangaufwärts und seine linke Seite talwärts liegt, so wandert zumindest ein Großteil des Gutes zu dem linken rückwärtigen Ende des Überkehrsiebes bzw. über dessen Ende oder gegebenenfalls durch die linke Durchlaßöffnung 29 auf die linke seite des Bodens 31 und infolge dessen Anordnung nach vorne, bis es durch die entsprechend gestaltete Einlaßöffnung in dem Schneckengehäuse 37 in die nach rechts fördernde Förderschnecke 38 gelangt. Diese wiederum fördert das Gut zur rechten Seite des Mähdreschers und über das Schaufelrad 40 und den rechts angeordneten Wurfschacht 33 auf die rechte, also Hangseite des Zuführbodens 22, so daß das Gut einem weiteren Durchlauf unterworfen wird. Ist die Schräglage des Mähdreschers umgekehrt, so kommt der linke Wurfförderer 32' in entsprechender Weise zu Einsatz, so daß bei Hangfahrten das sich auf dem oberen Sieb 25 befindliche, talwärts wandernde und nicht durchgesiebte Gut immer wieder auf die Hangseite des Zuführbodens zurückgefördert wird. die Wurfförderer 33 und 34 werden entweder ständig angetrieben oder bei Hangfahrten über eine Steuervorrichtung wechselweise zugeschaltet, wenn ihnen Erntegut zugeführt wird.

In Fig. 3 und 4 ist ein weiteres Ausführungsbeispiel einer Rückführeinrichtung mit Rücklaufrinnen 55, 56 und den Elevatorförderern 58, 59 für das auf einer Seite des oberen Siebes 25 bei Hangfahrten sich ansammelnde Gut dargestellt. In Fig. 3 und 4 sind die mit Fig. 2 und 5 übereinstimmenden Teile mit den gleichen Bezugszeichen versehen.

In Fig. 3 befindet sich unter dem Hordenschüttler 49 der Rücklaufboden 50, der das aus dem Hordenschüttler abgegebene Erntegut dem Zuführboden 22 zuführt. Über den Zuführboden 22 gelangt das Erntegut zur Reinigungsvorrichtung 21. Wie aus Fig. 4 hervorgeht, besteht die Reinigungsvorrichtung 21 aus dem oberen Sieb 25 und dem unteren Sieb 26, die durch die seitenwände 27 und 28 begrenzt werden, wobei je eine Rücklaufrinne 55, 56 seitlich an den Seitenwänden 27, 28 angebracht ist. Oberhalb der Oberfläche des oberen Siebes 25 ist die Seitenwand 27 und 28 verlängert und mit einem geneigt verlaufenden Abdeckteil 51 versehen, so daß das Gut 52 bei Schräglage des Mähdreschers 10 gemäß Pfeil 53 über die Oberkante 54 des Abdeckteiles 51 wandert und z.B. in der rechten Rücklaufrinne 55 oder der linken Rücklaufrinne 56 aufgefangen wird. Die Rücklaufrinnen 55 und 56 sind V-förmig zueinander angeordnet und verlaufen mit Bezug auf die Standfläche des Mähdreschers 10 geneigt, so daß das Erntegut gemäß Fig. 3 der vorderen bzw. hinteren Förderschnecke 38 bzw. 38' zugeführt werden kann. In Fig. 3 sind lediglich die beiden Rücklaufrinnen 55 und 56, die an der linken Seitenwand 28 angeordnet sind, dargestellt, die zur Beschickung der vorderen Förderschnecke 38 dienen. An der rechten Seitenwand 27 befinden sich ebenfalls zwei Rücklaufrinnen, die das Gut der hinteren Förderschnecke 38' zuführen, wenn der Mähdrescher nach rechts geneigt ist. Die Rücklaufrinnen 55, 56 an der rechten Seitenwand 27 führen dann das Erntegut über die Einlaßöffnung in das Schneckengehäuse 37', so daß das jeweils auf der Talseite aufgesammelte Erntegut über die Förderschnecke 38' zur Hangseite in dem Elevatorförderer 58 gefördert wird. Über den Elevatorförderer 58 gelangt das Erntegut nach oben, so daß es dann auf der linken Seite des Rücklaufbodens 50 wieder abgegeben werden kann, der dann das Erntegut dem Zuführboden 22 zuführt, so daß das Erntegut erneut dem Reinigungsprozeß zugeführt wird. In Fig. 3 ist lediglich der hinten liegende Elevatorförderer 58 in gestrichelten Linien angedeutet, während der auf der anderen Seite der Reinigungsvorrichtung liegende Elevatorförderer 59 der Einfachheit halber nicht dargestellt ist. Ist der Mähdrescher beispielsweise nach links geneigt, so gelangt das Erntegut über die Rücklaufrinnen 55, 56 und die Einlaßöffnung in das Schneckengehäuse 37. Die Förderschnecke 38 fördert von links nach rechts und somit entgegengesetzt zur Förderschnecke 38', so daß auch das auf der linken seite der Reinigungsvorrichtung über die Rücklaufrinnen 55, 56 angesammelte Gut dem Elevatorförderer 59 zugeführt werden kann, der das Erntegut wieder dem Rücklaufboden 50 zuführt.

Die beiden Förderschnecken 38 und 38' gemäß Fig. 3 und 4 können ständig angetrieben werden, so daß sie je nach Hanglage entweder das Erntegut von der linken oder von der rechten seite der Reinigungsvorrichtung 21 auf die jeweils gegenüberliegende Seite der Reinigungsvorrichtung leiten. Auf diese Weise wird sichergestellt, daß das auf der Talseite über das obere Sieb 25 abgegebene Erntegut nicht verlorengeht, sondern erneut dem Reinigungsprozeß zugeführt werden kann, gleich an welcher Stelle das auf einer Seite angesammelte Erntegut abgegeben wird. In den Figuren 3 und 4 bzw. 2 und 5 sind jeweils zwei gegenläufig arbeitende Förderschnecken 38 und 38' vorgesehen. Es ist jedoch auch möglich, lediglich nur eine Förderschnecke vorzusehen, deren Drehrichtung umkehrbar ist und die wechselweise entweder den linken oder den rechten Höhenförderer mit Erntegut beschickt. Hierzu ist der Förderschnecke ein entsprechendes Umkehrgetriebe vorgeschaltet, wodurch ein Wechsel der Antriebsrichtung der Förderschnecke herbeigeführt werden kann. gemäß Fig. 3 endet jeder Elevatorförderer 58 und 59 oberhalb des Rücklaufbodens 50, und das Gut wird über am oberen Ende der Elevatorförderer vorgesehene Wurfräder 45, 46 dem Rücklaufboden 50 aufgegeben. Es ist jedoch auch möglich, das obere Ende des Elevatorförderers 58 und 59 an den Zuführboden 22 (siehe Fig. 2) heranzuführen oder bis zur Dresch- und Trenntrommel zu leiten, so daß das Erntegut auch dem Dresch- bzw. Trennprozeß zugeführt werden kann.

In den beiden Ausführungsbeispielen sind die Förderschnekken 38, 38' rechtsgängig ausgebildet und werden gegenläufig angetrieben. Es ist jedoch auch vorteilhaft, die Förderschnecken links- und rechtsgängig auszubilden und sie dann gleichlaufend anzutreiben.

Gleichfalls können die Rücklaufrinnen 55, 56 auch bei dem Ausführungsbeispiel nach Fig. 2 und 5 vorgesehen sein.

## Ansprüche

1. An einem Mähdrescher (10) vorgesehene Rückführeinrichtung für eine einen Siebkasten (24) zum Auffangen, Sieben und Reinigen des ausgedroschenen Gutes aufweisende Reinigungsvorrichtung (21) mit einer Fördereinrichtung zum Rückführen des bei Hangfahrten auf dem Siebkasten (24) zur Talseite wandernden unausgesiebten Gutes, zu der zwei an je einer Seite der Reinigungsvorrichtung (21) vorgesehene Auslässe (35), von denen einer bei Schräglage des Mähdreschers das unausgesiebte Gut der Hangseite der Reinigungsvorrichtung (21) bzw. des Siebkastens (24) zuführt, und eine Querfördervorrichtung gehören, der bei Hangfahrten das unausgesiebte Gut zugeführt wird, dadurch gekennzeichnet, daß die Querfördervorrichtung das ihr auf der Talseite zugeführte Gut zu ihrem hangseitigen Ende fördert und das unausgesiebte Gut über den Auslaß (35) an der Hangseite auf die Reinigungsvorrichtung (21) bzw. den Siebkasten (24) rückgeführt wird.

2. Rückführeinrichtung nach Anspruch 1, dadurch gekennzeichnet, daß die Förderrichtung der Querfördervorrichtung umkehrbar ist.

3. Rückführeinrichtung nach Anspruch 1, dadurch gekennzeichnet, daß die Querfördereinrichtung aus zwei gegenläufig arbeitenden Förderelementen besteht, die mit ihrem einen Ende an einen Höhenförderer (Wurfförderer 32, 32'; Elevatorförderer 58, 59) angeschlossen sind, wobei ihr anderes Ende bzw. ein diesem Ende zugeordneter Bereich mit je einer Endseite des Siebkastens (24) verbunden ist.

4. Rückführeinrichtung nach Anspruch 3, dadurch gekennzeichnet, daß die Förderelemente als Förderschnecken (38, 38') ausgebildet sind.

5. Rückführeinrichtung nach Anspruch 4, dadurch gekennzeichnet, daß die Förderschnecken (38, 38') in je einem eine Einlaßöffnung und eine Auslaßöffnung aufweisenden Schneckengehäuse (37, 37') angeordnet sind, die sich über die seitliche Begrenzung des Siebkastens (24) hinaus erstrecken.

6. Rückführeinrichtung nach Anspruch 5, dadurch gekennzeichnet, daß eine jede Einlaßöffnung mit an Seitenwänden (27, 28) des Siebkastens (24) angeordneten Auffangelementen in Förderverbindung steht.

7. Rückführeinrichtung nach einem oder mehreren der vorherigen Ansprüche, dadurch gekennzeichnet, daß jeder Auslaß der Höhenförderer (Wurfförderer 32, 32' bzw. Elevatorförderer 58, 59) in dem Bereich des Rücklaufbodens (50) eines Hordenschüttlers (49) und/oder eines dem Siebkasten (24) vorgeschalteten Zuführbodens (22) vorgesehen ist.

8. Rückführeinrichtung nach Anspruch 1, dadurch gekennzeichnet, daß der Höhenförderer als Elevatorförderer (58, 59) oder als ein Schaufelrad (40, 40') aufweisender Wurfförderer (32, 32') ausgebildet ist.

9. Rückführeinrichtung nach einem oder mehreren der vorherigen Ansprüche, dadurch gekennzeichnet, daß die beiden horizontal angeordneten Förderschnecken (38, 38') unterhalb des Siebkastens (24) in einer Ebene und hintereinander angeordnet sind.

10. Rückführeinrichtung nach Anspruch 6, dadurch gekennzeichnet, daß die Auffangelemente an jeder Seitenwand (27, 28) aus mit Bezug auf die Standfläche des Mähdreschers (10) geneigt verlaufenden Rücklaufrinnen (55, 56) bestehen, die in etwa V-förmig zueinander ausgerichtet sind und deren Abgabeenden mittel- oder unmittelbar mit dem Höhenförderer in Wirkverbindung stehen, während das vordere Ende der einen Rücklaufrinne (56) sich bis in den vorderen Bereich des Siebkastens (24) und das hintere Ende der anderen Rücklaufrinne (55) sich bis in den Abgabebereich des Siebkastens (24) erstreckt.

11. Rückführeinrichtung nach einem oder mehreren der vorherigen Ansprüche, dadurch gekennzeichnet, daß an der Seite und/oder im Bereich des Endes des oberen und/oder unteren Siebes (25, 26) größere Durchlaßöffnungen (29) vorgesehen sind, die bei Schräglage des Siebkastens (24) über Klappen (30) geöffnet sind und seitlich angesammeltes Erntegut über die Rücklaufrinnen (55, 56) oder einen geneigt verlaufenden Boden (31) einem Höhenförderer zuführen.

12. Rückführeinrichtung nach einem oder mehreren der vorherigen Ansprüche, dadurch gekennzeichnet, daß jeweils am Aufgabeende der Förderschnecke (38, 38') das Schaufelrad (40) des Wurfförderers (33, 34) angeordnet ist.

**Claims**

1. Feedback device provided on a combine harvester (10) for a cleaning device (21) comprising a sieve box (24) for receiving, sieving and cleaning the threshed material, with a conveyor device for feeding back the unsieved material wandering to the downslope side on the sieve box (24) during inclined travel, to which conveyor device there pertain two outlets (35), one on each side of the cleaning device (21), of which outlets one feeds the un-sieved material to the up-slope side of the cleaning device (21) or of the sieve box (24) in an inclined attitude of the combine harvester, and a transverse conveyor device to which the un-sieved material is fed during inclined travel, characterized in that the conveyor device feeds the material fed to its down-slope end to its up-slope end and feeds back the un-sieved material through the outlet (35) on the up-slope side on to the cleaning device (21) or the sieve box (24).

2. Feedback device according to claim 1, characterized in that the conveying direction of the transverse conveyor device is reversible.

3. Feedback device according to claim 1, characterized in that the transverse conveyor device consists of two conveyor elements operating contrariwise, which are connected at their one ends to an elevating conveyor (throw conveyor 32, 32'; lift conveyor 58, 59), their other end or a region associated with this end being connected to one end side each of the sieve box (24).

4. Feedback device according to claim 3, characterized in that the conveyor elements are formed as conveyor augers (38, 38').

5. Feedback device according to claim 4, characterized in that the conveyor augers (38, 38') are each arranged in an auger housing (37, 37') having an inlet opening and an outlet opening, which housings extend beyond the lateral limits of the sieve box (24).

6. Feedback device according to claim 5, characterized in that each inlet opening is in conveying connection with collecting elements arranged at sidewalls (27, 28) of the sieve box (24).

7. Feedback device according to one or more of the preceding claims, characterized in that each outlet of the elevating conveyors (throw conveyors 32, 32' or lift conveyors 58, 59) is provided in the region of the feedback floor (50) of a hurdle shaker (49) and/or of a feed floor (22) preceding the sieve box (24).

8. Feedback device according to claim 1, characterized in that the elevating conveyor is formed as a lift conveyor (58, 59) or as a throw conveyor (32, 32') having a centrifugal wheel (40, 40').

9. Feedback device according to one or more of the preceding claims, characterized in that the two horizontally arranged conveyor augers (38, 38') are arranged beneath the sieve box (24) in one plane and one behind the other.

10. Feedback device according to claim 6, characterized in that the collecting elements on each side wall (27, 28) consist of feedback channels (55, 56) inclined with respect to the standing surface of the combine harvester (10), which are disposed somewhat V-shaped relative to each other and whose discharge ends are directly or indirectly coupled to the elevating conveyor, while the front end of the one feedback channel (56) extends into the front region of the sieve box (24) and the rear end of the other feedback channel (55) extends up to the discharge region of the sieve box (24).

11. Feedback device according to one or more of the preceding claims, characterized in that there are provided large through openings (29) on the side and/or in the region of the end of the upper and/or lower sieve (25, 26), which openings are opened by flaps (30) during an inclined attitude of the sieve box (24) and feed collected harvested material laterally via the feedback channels (55, 56) or an inclined floor (31) to an elevating conveyor.

12. Feedback device according to one or more of the preceding claims, characterized in that the centrifugal wheel (40) of the throw conveyor (33, 34) is arranged in each case at the discharge end of the conveyor auger (38, 38').

**Revendications**

1. Dispositif de renvoi prévu sur une moissonneuse-batteuse (10) pour un dispositif de nettoyage (21) comportant un filtre-tamis (24) servant à collecter, tamiser et nettoyer le produit moissonné, et comportant un dispositif d'entraînement, qui sert à renvoyer le produit non tamisé se déplaçant en direction du fond lors de son déplacement selon un trajet en pente sur le filtre-tamis (24), et qui comporte deux sorties (35), qui sont prévues de chaque côté du dispositif de nettoyage (21) et dont l'une envoie le produit non tamisé au côté relevé du dispositif de nettoyage (21) ou du filtre-tamis (24), lorsque la moissonneuse-batteuse est dans une position oblique, et un dispositif d'entraînement transversal, auquel le produit non tamisé est envoyé lors de déplacements selon un trajet en pente, caractérisé en ce que le dispositif d'entraînement transversal entraîne le produit, qui est envoyé au fond, à son extrémité relevée et que la matière non tamisée est renvoyée, par l'intermédiaire de la sortie (35) située sur le côté relevé, au dispositif de nettoyage (21) ou au filtre-tamis (24).

2. Dispositif de renvoi selon la revendication 1, caractérisé en ce que la direction d'entraînement du dispositif d'entraînement transversal peut être inversée.

3. Dispositif de renvoi selon la revendication 1, caractérisé en ce que le dispositif d'entraînement transversal est constitué de deux éléments d'entraînement, qui travaillent en des sens opposés et sont raccordés, par une de leur extrémité, à un élévateur (convoyeur-chargeur 32, 32', convoyeur élévateur 58, 59), tandis que leur autre extrémité ou une partie associée à cette extrémité est reliée respectivement à un côté d'extrémité du filtre-tamis (24).

4. Dispositif de renvoi selon la revendication 3, caractérisé en ce que les éléments d'entraînement sont réalisés sous la forme de vis convoyeuses (38, 38').

5. Dispositif de renvoi selon la revendication 4, caractérisé en ce que les vis convoyeuses (38, 38') sont disposées dans des carters respectifs (37, 37'), qui comportent une ouverture d'entrée et une ouverture de sortie et s'étendent sur l'étendue latérale du filtre-tamis (24).

6. Dispositif de renvoi selon la revendication 5, caractérisé en ce que chaque ouverture d'entrée est reliée, selon une liaison d'entraînement, à des éléments de collecte disposés sur des parois latérales (27, 28) du filtre-tamis (24).

7. Dispositif de renvoi selon une ou plusieurs des revendications précédentes, caractérisé en ce que chaque sortie de l'élévateur (convoyeur-chargeur 32, 32' ou convoyeur-élévateur 58, 59) est prévue dans la zone du fond de renvoi (50) d'une table de secouage à claies (49) et/ou d'une table d'alimentation (22) disposée en amont du filtre-tamis (24).

8. Dispositif de renvoi selon la revendication 1, caractérisé en ce que l'élévateur est réalisé sous la forme d'un convoyeur-élévateur (58, 59) ou d'un convoyeur chargeur (32, 32') comportant une roue à godets (40, 40').

9. Dispositif de renvoi selon une ou plusieurs des revendications précédentes, caractérisé en ce que les deux vis convoyeuses horizontales (38, 38') sont disposées dans un plan au-dessous du filtre-tamis (24) et l'une derrière l'autre.

10. Dispositif de renvoi selon la revendication 6, caractérisé en ce que les éléments de collecte situés sur chaque paroi latérale (27, 28) sont constitués par des goulottes de renvoi (55, 56), qui sont inclinées par rapport à la surface de support de la moissonneuse-batteuse (10) et sont alignées l'une par rapport à l'autre selon une disposition approximativement en forme de V et dont les extrémités de déchargement sont reliées, directement ou indirectement, selon une liaison active, à l'élévateur, tandis que l'extrémité avant d'une goulotte de renvoi (56) s'étend jusque dans la partie avant du filtre-tamis (24) et que l'extrémité arrière de l'autre goulotte de renvoi (55) s'étend jusque dans la zone de déchargement du filtre-tamis (24).

11. Dispositif de renvoi selon une ou plusieurs des revendications précédentes, caractérisé en ce que sur le côté et/ou dans la zone de l'extrémité du tamis supérieur et/ou inférieur (25, 26), il est prévu des ouvertures de passage (29) plus étendues, qui, lorsque le filtre-tamis (24) est en position inclinée, sont ouvertes par l'intermédiaire de clapets (30) et envoient le produit formé par la récolte, accumulé latéralement, à un élévateur, par l'intermédiaire des goulottes de renvoi (55, 56) ou d'un fond incliné (31).

12. Dispositif de renvoi selon une ou plusieurs des revendications précédentes, caractérisé en ce que la roue à godets (40) du convoyeur-chargeur (33, 34) est disposée sur l'extrémité de chargement de la vis convoyeuse (38, 38').

Fig. 1

35

10

12

14

16

18

19

20

Fig.2

35

22

21

29

25

30

24

26

33

34

31

23

37

38

38

32

36'

37'

32'

# Fig. 3

# Fig. 4

Fig.5